# FASCICULE DE BREVET EUROPEEN

(11) **EP 1 975 018 B1**
(45) Date de publication et mention de la délivrance du brevet: **05.01.2011**
(21) Numéro de dépôt: 07300909.4
(22) Date de dépôt: 30.03.2007
(51) Int. Cl.: B60R 25/10

(54) **Dispositif d'alarme pour véhicule automobile et véhicule automobile comprenant une batterie et un tel dispositif**
Alarmanlage für Kraftfahrzeug und Kraftfahrzeug mit einer Batterie und einer derartigen Anlage
Alarm device for an automobile and automobile comprising a battery and such a device

(43) Date de publication de la demande: 01.10.2008
(73) Titulaire: Delphi Technologies, Inc., Troy, MI 48007 (US)
(72) Inventeur: Jadrani, Abdeslam, 75014, Paris (FR)
(74) Mandataire: Robert, Vincent

(56) Documents cités:
- EP-A2- 0 780 820
- GB-A- 1 125 615
- GB-A- 1 555 761
- GB-A- 2 064 112
- US-A1- 2004 217 849

## Description

La présente invention se rapporte à un dispositif d'alarme, en particulier pour véhicule automobile et un véhicule automobile comprenant une batterie d'alimentation et un tel dispositif.

Le document US 5 774 044 décrit un dispositif d'alarme pour véhicule automobile, qui est reliée à la batterie du véhicule et qui comprend également une batterie auxiliaire interne. La batterie interne permet d'alimenter le dispositif d'alarme en cas de panne ou défaillance de la batterie du véhicule. Toutefois, la tension fournie par la batterie interne varie fortement avec la température. De plus, la tension fournie diminue quand la batterie interne est déchargée. Il en résulte que le niveau de pression sonore varie et que la durée de vie du dispositif d'alarme est limitée.

Le document GB 2 064 112A décrit un dispositif d'alarme selon le préambule de la revendication 1.

Dans le document précité, on prévoit une source de tension constante pour alimenter un micro-ordinateur. Toutefois, la tension constante n'est pas utilisée pour alimenter les éléments qui génèrent le signal d'alarme.

Le but de l'invention est de proposer un dispositif d'alarme qui ne présente pas au moins certains des inconvénients précités de l'art antérieur.

Pour cela, l'invention fournit un dispositif d'alarme selon la revendication 1 et un véhicule automobile comprenant une batterie d'alimentation et un tel dispositif selon la revendication 7.

Grâce à ces caractéristiques, quand la tension fournie par l'accumulateur varie, par exemple avec la température, la tension fournie par la source de tension reste sensiblement constante. Le niveau de pression sonore est donc meilleur. De plus, quand la tension fournie par l'accumulateur diminue, par exemple parce qu'il est déchargé, la tension fournie par la source de tension reste sensiblement constante. La durée de vie du dispositif d'alarme est donc prolongée.

Le dispositif d'alarme comprenant une borne d'alimentation apte à être reliée à une source de tension externe de manière à alimenter le générateur d'alarme par la de tension externe.

Avantageusement, le dispositif d'alarme comprend une première diode apte à relier la source de tension externe au générateur d'alarme et une deuxième diode reliant la source de tension interne au générateur d'alarme.

Le dispositif d'alarme comprend un circuit de commande apte à activer et désactiver l'élévateur de tension en fonction de la tension fournie par la source de tension externe.

Cela permet de ne pas ou peu décharger l'accumulateur quand la source de tension externe fournit une tension suffisante.

De préférence, le circuit de commande est apte à désactiver l'élévateur de tension quand la tension fournie par la source de tension externe est supérieure à un seuil déterminé.

Avantageusement, ladite plage déterminée comprend la plage de 0,9 à 3 V.

Selon un mode de réalisation particulier, le signal sensible est un signal sonore et/ou visuel.

De préférence, l'élévateur de tension comprend un circuit intégré.

L'invention fournit également un véhicule automobile comprenant une batterie d'alimentation et un dispositif d'alarme selon l'invention ci-dessus, dans lequel la batterie d'alimentation est reliée à la borne d'alimentation du dispositif d'alarme.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :

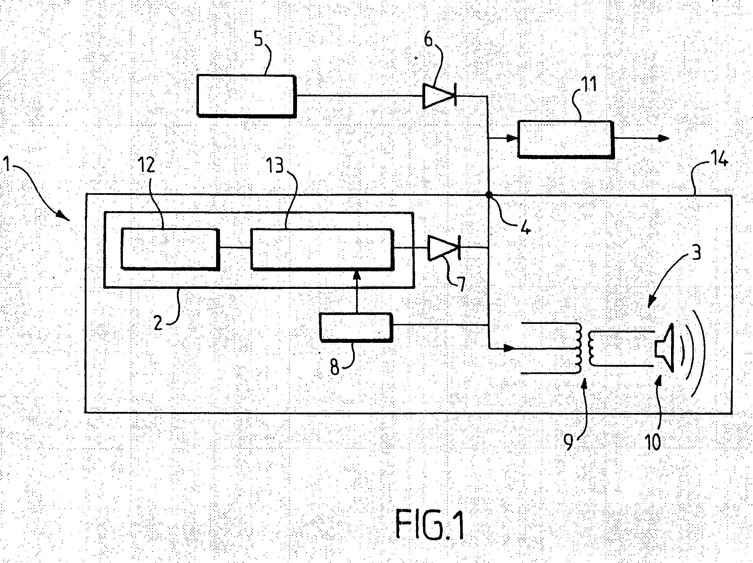

- La figure 1 est une représentation schématique d'un dispositif d'alarme selon un mode de réalisation de l'invention.

Le dispositif d'alarme 1 représenté sur la figure 1 est agencé dans un véhicule automobile et est destiné à générer une alarme sonore, par exemple quand une tentative d'intrusion est détectée.

Le dispositif d'alarme 1 comprend un générateur d'alarme 3 qui comprend par exemple un transformateur 9 et un transducteur 10. Le transducteur 10 est par exemple un transducteur piézoélectrique apte à générer un signal sonore. Un circuit de commande 8 est apte à détecter une condition d'alarme et est relié à des bornes du transformateur 9 de manière à pouvoir activer le générateur d'alarme 3 quand une condition d'alarme est détectée.

Le dispositif d'alarme 1 est reliée à la batterie 5 du véhicule automobile, au niveau d'une borne d'alimentation 4. Outre le dispositif d'alarme 1, la batterie 5 alimente d'autres composants du véhicule, par l'intermédiaire d'un régulateur 11. La tension fournie par la batterie 5 permet d'alimenter le générateur d'alarme 3 et le circuit de commande 8, comme le représente la figure 1.

Le dispositif d'alarme 1 comprend également une source de tension interne 2. Ainsi, si la batterie 5 ne fournit plus de tension, par exemple parce qu'elle est déchargée ou déconnectée, le dispositif d'alarme 1 reste opérationnel. La source de tension interne 2 alimente le générateur d'alarme 3 et le circuit de commande 8.

Comme le représente la figure 1, la batterie 5 alimente le générateur de tension 3 par l'intermédiaire d'une première diode 6, et la source de tension interne 2 alimente le générateur de tension 3 par l'intermédiaire d'une deuxième diode 7. La tension nominale fournie par la batterie 5 est légèrement supérieure à celle fournie par la source de tension interne 2. Ainsi, en fonctionnement normal, la deuxième diode 7 est bloquante, ce qui évite de décharger inutilement la source de tension 2. Sur la figure 1, la première diode 6 est représentée à l'extérieure du boîtier 14 du dispositif 1. Elle pourrait également être agencée à l'intérieur.

La source de tension interne 2 comprend un ou plusieurs accumulateurs 12, et un élévateur de tension 13. L'élévateur de tension 13 est par exemple réalisé avec un circuit intégré d'un type connu, et est apte à délivrer une tension de sortie sensiblement constante quand la tension fournie par les accumulateurs 12 varie dans une plage déterminée. Par exemple, pour une tension nominale de la batterie 5 de 12 V, la tension de sortie de l'élévateur de tension 13 est de 10 V si la tension fournie par les accumulateurs 12 varie dans la plage de 0,9 à 3 V.

Dans un mode de réalisation, le circuit de commande 8 est apte à désactiver l'élévateur de tension 13 quand la tension fournie par la batterie 5 est suffisante, de manière à économiser les accumulateurs 12.

Le fonctionnement du dispositif d'alarme 1 découle de la description qui précède. En fonctionnement nominal, le générateur d'alarme 3 et le circuit de commande 8 sont alimentés par la batterie 5. Si la batterie 5 est déchargée ou déconnectée, l'alimentation est prise en charge par la source de tension interne 2. Grâce à l'élévateur de tension 13, la tension fournie par la source de tension interne 2 est sensiblement constante même si la température varie, par exemple entre -40°C et +85°C. Le niveau de pression sonore produit par le générateur d'alarme 3 correspond donc au niveau nominal. Si les accumulateurs 12 se déchargent et que la tension qu'ils fournissent diminue, la source de tension 2 continuera à fournir une tension de sortie sensiblement constante pendant un certain temps. La durée de vie du dispositif d'alarme 1 est donc améliorée.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention défini par les revendications.

## Revendications

1. Dispositif d'alarme (1) comprenant une source de tension interne (2) et un générateur d'alarme (3) apte à générer un signal d'alarme sensible, le générateur d'alarme étant alimenté par la source de tension interne qui comprend un accumulateur (12) et un élévateur de tension (13) apte à délivrer une tension sensiblement constante quand la tension fournie par l'accumulateur varie dans une plage déterminée, de manière à alimenter le générateur d'alarme avec ladite tension sensiblement constante, ledit dispositif d'alarme comprenant une borne d'alimentation (4) apte à être reliée à une source de tension externe (5) de manière à alimenter le générateur d'alarme par la source de tension externe, **caractérisé en ce qu'**il comprend un circuit de commande (8) apte à activer et désactiver l'élévateur de tension en fonction de la tension fournie par la source de tension externe.

2. Dispositif d'alarme selon la revendication 1, comprenant une première diode (6) apte à relier la source de tension externe (5) au générateur d'alarme et une deuxième diode (7) reliant la source de tension interne au générateur d'alarme.

3. Dispositif d'alarme selon la revendication 1 ou 2, dans lequel le circuit de commande est apte à désactiver l'élévateur de tension quand la tension fournie par la source de tension externe est supérieure à un seuil déterminé.

4. Dispositif d'alarme selon l'une des revendications 1 à 3, dans lequel ladite plage déterminée comprend la plage 0,9 à 3 V.

5. Dispositif d'alarme selon l'une des revendications 1 à 4, dans lequel le signal sensible est un signal sonore et/ou visuel.

6. Dispositif d'alarme selon l'une des revendications 1 à 5, dans lequel l'élévateur de tension comprend un circuit intégré.

7. Véhicule automobile comprenant une batterie d'alimentation (5) et un dispositif d'alarme (1) selon l'une des revendications 2 à 6, dans lequel la batterie d'alimentation (5) est reliée à la borne d'alimentation (4) du dispositif d'alarme.

## Claims

1. Alarm device (1) comprising an internal voltage source (2) and an alarm generator (3) able to generate a substantial alarm signal, the alarm generator being supplied by the internal voltage source which comprises an accumulator (12) and a voltage multiplier (13) able to deliver a substantially constant voltage when the voltage supplied by the accumulator varies within a determined range, so as to supply the alarm generator with the said substantially constant voltage, the said alarm device including a supply terminal (4) able to be connected to an external voltage source (5) so as to supply the alarm generator by the external voltage source, **characterised by** the fact that it includes a control circuit (8) able to activate and deactivate the voltage multiplier as a function of the voltage supplied by the external voltage source.

2. Alarm device as described in claim 1, including a first diode (6) able to connect the external voltage source (5) to the alarm generator and a second diode (7) connecting the internal voltage source to the alarm generator.

3. Alarm device as described in claim 1 or 2, in which the control circuit is able to deactivate the voltage multiplier when the voltage supplied by the external voltage source is greater than a determined threshold.

4. Alarm device as described in one of claims 1 to 3, in which the said determined range comprises the range 0.9 to 3 V.

5. Alarm device as described in one of claims 1 to 4, in which the substantial signal is an audio and/or visual signal.

6. Alarm device as described in one of claims 1 to 5, in which the voltage multiplier comprises an integrated circuit.

7. Motor vehicle including a supply battery (5) and an alarm device (1) as described in one of claims 2 to 6, in which the supply battery (5) is connected to the supply terminal (4) of the alarm device.

## Patentansprüche

1. Alarmvorrichtung (1), umfassend eine interne Spannungsquelle (2) und einen Alarmgenerator (3), der ein wahrnehmbares Alarmsignal erzeugen kann, wobei der Alarmgenerator durch die interne Spannungsquelle versorgt wird, die einen Akkumulator (12) und einen Spannungslifter (13) umfasst, der eine im Wesentlichen konstante Spannung liefern kann, wenn die von dem Akkumulator gelieferte Spannung sich in einem bestimmten Bereich ändert, so dass der Alarmgenerator mit dieser im Wesentlichen konstanten Spannung versorgt wird, wobei die Alarmvorrichtung einen Versorgungsanschluss (4) umfasst, der mit einer externen Spannungsquelle (5) verbunden werden kann, so dass der Alarmgenerator durch die externe Spannungsquelle versorgt wird, **dadurch gekennzeichnet, dass** sie eine Steuerschaltung (8) umfasst, die den Spannungslifter in Abhängigkeit von der von der externen Spannungsquelle gelieferten Spannung aktivieren und deaktivieren kann.

2. Alarmvorrichtung nach Anspruch 1, umfassend eine erste Diode (6), die die externe Spannungsquelle (5) mit dem Alarmgenerator verbinden kann, und eine zweite Diode (7), die die interne Spannungsquelle mit dem Alarmgenerator verbindet.

3. Alarmvorrichtung nach Anspruch 1 oder 2, bei der die Steuerschaltung den Spannungslifter deaktivieren kann, wenn die von der externen Spannungsquelle gelieferte Spannung höher als eine bestimmte Schwelle ist.

4. Alarmvorrichtung nach einem der Ansprüche 1 bis 3, bei der der bestimmte Bereich den Bereich 0,9 bis 3 V umfasst.

5. Alarmvorrichtung nach einem der Ansprüche 1 bis 4, bei der das wahrnehmbare Signal ein Ton- und/oder Sichtsignal ist.

6. Alarmvorrichtung nach einem der Ansprüche 1 bis 5, bei der der Spannungslifter eine integrierte Schaltung umfasst.

7. Kraftfahrzeug, umfassend eine Versorgungsbatterie (5) und eine Alarmvorrichtung (1) nach einem der Ansprüche 2 bis 6, bei dem die Versorgungsbatterie (5) mit dem Versorgungsanschluss (4) der Alarmvorrichtung verbunden ist.
